# EUROPÄISCHE PATENTSCHRIFT

(11) **EP 2 881 762 B1**
(45) Veröffentlichungstag und Bekanntmachung des Hinweises auf die Patenterteilung: **12.10.2022**
(21) Anmeldenummer: 14191985.2
(22) Anmeldetag: 06.11.2014
(51) Int. Cl.: G01V 8/20, G01N 21/57, G01S 17/08, G01S 7/481

(54) **Optoelektronischer Sensor und Verfahren zur Erfassung glänzender Objekte**
Optoelectronic sensor and method for detecting glossy objects
Capteur optoélectrique et procédé de détection d'objets brillants

(30) Priorität: 05.12.2013 DE 102013113504; 23.04.2014 DE 102014105746
(43) Veröffentlichungstag der Anmeldung: 10.06.2015
(73) Patentinhaber: SICK AG, 79183 Waldkirch (DE)
(72) Erfinder: Meyer, Ralf, 79369 Wyhl (DE); Hirt, Günter, 77790 Steinach (DE); Hauptmann, Axel, 79183 Waldkirch (DE)

(56) Entgegenhaltungen:
- EP-A1- 2 348 331
- EP-A1- 2 362 243
- EP-A1- 2 390 620
- EP-A2- 0 183 270
- WO-A1-2011/072862
- DE-A1-102005 037 490
- DE-A1-102005 062 258
- DE-A1-102006 057 878
- US-A1- 2002 171 826

## Beschreibung

Die Erfindung betrifft einen optoelektronischen Sensor und ein Verfahren zur Erfassung glänzender Objekte nach dem Oberbegriff von Anspruch 1 beziehungsweise 11.

Eine häufige Anwendung für einen optischen Sensor ist, die Anwesenheit eines Objekts zu erkennen. Oft werden sie als Schalter eingesetzt, die bei Ein- beziehungsweise Austritt eines Objekts in den Erfassungsbereich den Schaltzustand wechseln. Bekannt sind Einweglichtschranken, in denen ein Lichtsender einen Sendestrahl auf einen gegenüberliegenden Lichtempfänger sendet, so dass durch Lichtunterbrechung ein Objekt im Strahlengang erkannt wird. In einer Variante als Reflexionslichtschranke sind Lichtsender und Lichtempfänger am selben Ort angebracht und der Strahl wird durch einen Reflektor zurückgeworfen.

Eine weitere bekannte Familie von optoelektronischen Sensoren bilden Lichttaster, bei denen ähnlich einer Reflexionslichtschranke Lichtsender und Lichtempfänger in einem Gehäuse untergebracht sind. Allerdings wird hier der Sendestrahl frei in den Raum gerichtet und von einem Objekt remittiertes oder reflektiertes Licht im Lichtsender detektiert. Hier ist also ein Objekt im Strahlengang das detektierte Ereignis, welches zu Lichtempfang führt, während bei einer Lichtschranke umgekehrt im objektfreien Zustand der Strahl empfangen und durch das Objekt der Lichtempfang unterbrochen wird.

Es gibt auch innerhalb der Lichttaster unterschiedliche Ausführungen. Ein energetischer Taster bewertet für eine binäre Objektfeststellung die Intensität des Empfängersignals anhand einer Schaltschwelle. Bei einem Triangulationstaster stehen die optischen Achsen von Lichtsender und Lichtempfänger schräg zueinander und mit Hilfe eines ortsauflösenden Lichtempfängers kann der Winkel gemessen werden, unter dem ein Objekt erfasst wird. Dadurch wird eine Entfernungsbestimmung ermöglicht. Hintergrundausblendende Lichttaster bilden eine Art Hybrid. Wie in einem energetischen Lichttaster wird lediglich ein binäres Objektfeststellungssignal erzeugt und kein Entfernungswert gemessen. Zugleich wird aber der Aufbau eines Triangulationstasters ausgenutzt, um mit einem zumindest in einen Nah- und einen Fernbereich ortsauflösenden Lichtempfänger zwei Empfangssignale zu erzeugen. Deren Differenz wird mit einer Schaltschwelle bewertet, um so die Objekterfassung auf einen bestimmten Entfernungsbereich zu beschränken und Empfangssignale von Objekten außerhalb dieses Entfernungsbereichs als Hintergrundsignal auszublenden. Ein hintergrundausblendender Lichttaster ist beispielsweise in der DE 197 21 105 C2 offenbart, wobei hier Schalter vorgesehen sind, um die einzelnen Elemente eines ortsauflösenden Lichtempfängers auf veränderliche Weise dem Nah- oder Fernbereich zuzuordnen.

Ein mattes oder streuendes Objekt ist verhältnismäßig einfach und zuverlässig detektierbar. Es streut den Sendestrahl in alle Richtungen. Somit ist bei Lichtschranken eine Strahlunterbrechung und bei Lichttastern ein Empfang zumindest eines Teils des remittierten Lichts gewährleistet.

Viele im industriellen Umfeld zu detektierende Objekte haben aber eine glänzende Oberfläche, und dieser Glanz führt leicht zu Fehldetektionen. Beispiele hierfür sind metallische Objekte, plane Kunststoffe oder Glas. In Triangulationstastern oder Lichttastern mit Vorder- oder Hintergrundausblendung verschieben Glanzreflexe den Schwerpunkt des Empfangslichtflecks, und daraus ergeben sich Abstandsfehler oder bei vollständiger Umlenkung des Strahls sogar völlig falsche Abstandswerte.

Manche Sensoren treffen deshalb Maßnahmen, um negative Einflüsse durch Glanz zu unterdrücken, etwa indem durch geeignete Anstellwinkel ein direkter Rückreflex in den Sensor vermieden wird. Eine besonders große Herausforderung stellt die zuverlässige Erkennung glänzender Objekte dar, weil bereits kleinste Änderungen in Abstand oder Winkel zwischen Sensor und Tastgut große Unterschiede im Messsignal bedeuten.

Die DE 10 2006 057 878 A1 betrifft eine optoelektronische Vorrichtung mit einem ein Sendelichtstrahlbündel emittierenden Sender und einem eine Linearanordnung von Empfangselementen aufweisenden Empfänger, bei dem durch eine Amplitudenbewertung selektiv glänzende Objekte erfasst werden. Eine zweigeteilte Empfangsoptik sorgt dafür, dass auf dem Empfänger zwei getrennte Empfangslichtflecken erzeugt werden.

In einer alternativen Ausführungsform sind dafür zwei Sender vorgesehen. Das Sendelicht wird aufgestreut, damit Lichtempfang von glänzenden über einen großen Winkelbereich sichergestellt ist.

In der EP 0 519 409 B1 wird ein Glanzdetektor vorgestellt, der eine LED mit einer Projektionslinse zur Beleuchtung eines breiten Bereichs und einen Zeilensensor umfasst. Zur Auswertung werden Empfangssignale aus Reflexion und diffuser Remission verglichen.

Die DE 10 2010 022 273 A1 beschreibt einen optoelektronischen Sensor zum Erkennen von Objektkanten. Ein durch einen Lichtsender auf dem Objekt erzeugter Lichtfleck wird zweifach aufgenommen und durch eine vergleichende Bewertung die Objektkante detektiert. In weiteren Ausführungsformen sind zusätzliche Lichtsender und ortsauflösende Lichtempfänger vorgesehen. Das Detektionsprinzip basiert auf der diffusen Remission, wodurch zu vergleichende Lichtflecke in unterschiedlicher Intensität erfasst und rein energetisch ausgewertet werden. Glanz wird nicht erkannt und einleitend nur als Störeffekt angesehen.

Die US 2002/0171826 A1 offenbart eine Vorrichtung zum Messen der optischen Eigenschaften einer Oberfläche eines Werkstücks mit zwei separaten Lichtquellen. Die erste Quelle stellt einen oder mehrere fokussierte Lichtstrahlen bereit, die das Werkstück unter einem ersten Winkel treffen und von diesem reflektiert werden. Die zweite Quelle liefert eine oder mehrere nicht fokussierten Lichtstrahlen, die das Werkstück unter einem zweiten Winkel treffen, unterschiedlich vom ersten Winkel, und von diesem reflektiert werden. Alle der reflektierten Strahlen konvergieren auf einen einzelnen Fotodetektor. Die Strahlen sind im zeitmultiplex Verfahren angesteuert, so daß der Fotodetektor einen Strahl nur zu einer Zeit liest. Der Ausgang des Photodetektors wird verarbeitet, um die Oberflächenqualität des Werkstücks, wie beispielsweise Glanz bereitzustellen.

Die EP 0 183 270 A2 offenbart einen Glanzdetektor mit zwei Lichtquellen und zwei Lichtempfängern zur Erfassung einer Lichtreflexionsintensitätsverteilung einer Oberfläche eines Körpers.

Die EP 2 362 243 A1 offenbart ein Lichtgitter mit Lichtsendern in einem ersten Gehäuse und Lichtempfängern in einem gegenüberliegenden Gehäuse zur Bildung von Lichtschranken und zur Detektion von Objekten.

Die WO 2011/072862 A1 offenbart einen Sensor zur Prüfung von Wertdokumenten, der eine Beleuchtungseinrichtung zum Beleuchten eines Wertdokuments, eine Abbildungsoptik und eine Detektionseinrichtung aufweist.

Die DE 2005 062 258 A1 offenbart eine optoelektronische Vorrichtung mit mindestens einem Sender und mindestens einem Empfänger, welcher als Mehrfachempfangselement mit einer Mehrfachanordnung von Empfangselementen ausgebildet ist.

Die EP 2 348 331 A1 offenbart einen optoelektronischen Sensor zur Detektion von Objektkanten mit mindestens zwei Lichtsendern und einem ortsauflösenden Lichtempfänger.

Es ist daher Aufgabe der Erfindung, einen optoelektronischen Sensor zur Erkennung glänzender Objekte weiterzubilden.

Diese Aufgabe wird durch einen optoelektronischen Sensor und ein Verfahren zur Erfassung glänzender Objekte nach Anspruch 1 beziehungsweise 11 gelöst. Dabei geht die Erfindung von dem Grundgedanken aus, die Winkeltoleranz zu erhöhen, damit der direkte Reflex von einer glänzenden Oberfläche auch bei Abweichung von einer idealen Orientierung erfasst wird. Dazu wird eine Vielzahl von Lichtquellen als Lichtsender eingesetzt, die zu einer Senderzeile angeordnet sind. Dies sorgt dafür, dass über einen großen Winkelbereich in Senderzeilenrichtung, die hier ohne Beschränkung der Allgemeinheit als X-Richtung bezeichnet wird, zumindest eine der Lichtquellen im richtigen Winkel zu der glänzenden Oberfläche steht, so dass ihr Lichtreflex von dem glänzenden Objekt die Empfängerzeilenanordnung der Lichtempfangselemente trifft. Im Unterschied zu diffuser Remission oder zu Hintergrundlicht erzeugt der Glanzreflex einen abgegrenzten Empfangslichtfleck auf dem Lichtempfänger, dessen Intensitätsprofil (Glanzcharakteristik) ausgewertet werden kann. Insbesondere ist es möglich, ein ausgeprägtes Intensitätsmaximum (Peak) auf der Zeilenanordnung von Lichtempfangselementen zu erkennen.

Die Erfindung hat den Vorteil, dass eine große Kipptoleranz des Sensors beziehungsweise des zu detektierenden Objekts von beispielsweise ±10° erreicht wird. Auch gegenüber Abstandsvariationen ist das Erkennungsprinzip robust. Wegen Überlappung der verschiedenen Sende- und Empfangselemente wird ein Blindbereich vermieden. Glänzende Objekte werden bereits mit wenigen Lichtempfangselementen oder Empfangspixeln schnell und sicher detektiert. Die Glanzeigenschaften können fein abgestuft ermittelt werden, beispielsweise ein Unterschied zwischen hochglänzend und glänzend oder zwischen matt und seidenmatt erkannt werden.

Der Lichtsender weist bevorzugt eine Sendeoptik auf, um den Sendelichtstrahl seiner einen oder mehreren Lichtquellen zu kollimieren. Dazu weist noch bevorzugter die Sendeoptik zumindest eine Linse je Lichtquelle auf. Das Sendelicht soll nicht divergent sein, weil dadurch eine zu geringe Energiedichte der Lichtflecken erzeugt wird, die zudem noch stark abstandsabhängig ist. Selbst fokussiertes Licht hätte noch eine Abstandsabhängigkeit. Durch möglichst paralleles Sendelicht bleibt der Lichtfleck auf dem Objekt zumindest weitgehend abstandsunabhängig, und dadurch wird auch eine zuverlässige Bewertung des Glanzgrades ermöglicht. Eine Winkeltoleranz wird erfindungsgemäß nicht durch die Ausdehnung des Lichtflecks, sondern durch eine Vielzahl von Lichtflecken durch mehrere Lichtquellen und eine Vielzahl an Lichtempfangselementen erreicht.

Die Auswertungseinheit ist dafür ausgebildet, eine Halbwertsbreite des Intensitätsprofils zu bestimmen. Die Auswertungseinheit ist bevorzugt dafür ausgebildet, eine Amplitude, einen Flächeninhalt und/oder einen Flächenschwerpunkt des Intensitätsprofils beziehungsweise des Intensitätsmaximums und daraus einen Glanzgrad eines erfassten Objekts zu bestimmen. Es wird also innerhalb der Lichtempfangselemente einer Empfängerzeile ein Lichtfleck gesucht und anhand charakteristischer Parameter bewertet. Je nachdem, wie stark der Lichtfleck beziehungsweise das von ihm verursachte Intensitätsmaximum ausgeprägt ist, wurde ein stark glänzendes oder ein diffus remittierendes Objekt erfasst beziehungsweise nur Fremdlicht empfangen. Der Begriff Glanzgrad wird also hier so breit verstanden, dass damit auch ein nicht glänzendes Objekt beschrieben werden kann. Weitere mögliche Kriterien zur Bewertung des Intensitätsprofils sind die Flanken des Lichtflecks, also beispielsweise deren Lage, Steilheit oder Steigungsverlauf.

In einer besonderen Anwendung kann aus dem Glanzgrad abgeleitet werden, ob eine glänzende Schutzfolie oder ein Schutzsiegel vorhanden ist oder nicht. Damit kann beispielsweise im Pharmaziebereich überprüft werden, ob die Sicherheitsverpackung eines Arzneimittels wie vorgeschrieben noch ungeöffnet zum Endkunden gelangt ("tamperevident").

Die Auswertungseinheit ist bevorzugt dafür ausgebildet, aus mindestens zwei Positionen eines Intensitätsmaximums innerhalb der Empfängerzeilenanordnung eine Entfernung eines erfassten Objekts zu bestimmen. Hier wird nicht nur die Form der Intensitätsmaxima bewertet, sondern auch deren Lage, um daraus einen Abstand zu triangulieren und somit zusätzliche Sensorinformationen zur Verfügung zu stellen.

Der Lichtsender weist zu zwei Senderzeilen angeordnete Lichtquellen auf. Jede Senderzeile gleicht durch den Versatz ihrer Lichtquellen in Senderzeilenrichtung ("X-Richtung") eine entsprechende Winkeltoleranz aus. Durch das Vorsehen zusätzlicher Senderzeilen wird darüber hinaus auch eine Winkeltoleranz in der dazu senkrechten Richtung ("Y-Richtung") erreicht.

Die Lichtquellen des Lichtsenders sind bevorzugt einzeln ansteuerbar. Dadurch wird ein erfasster Glanzreflex eindeutig der jeweils aktiven Lichtquelle oder Gruppe von Lichtquellen zugeordnet und das Empfangssignal nicht durch etwaige diffuse oder gerichtete Anteile von anderen Lichtquellen gestört.

Die Lichtquellen weisen bevorzugt unterschiedliche Wellenlängen auf. Dadurch werden Objekterfassungen in verschiedenen Spektren des ultravioletten, sichtbaren und infraroten Lichts ermöglicht. Die Wellenlängen können je Lichtquelle individuell oder gruppenweise gleich sein. Letzteres dient beispielsweise dazu, dass Senderzeilen unterschiedlicher Wellenlänge gebildet werden, sei es durch nebeneinander in unterschiedlichen Senderzeilen oder ineinander verschachtelt in der gleichen Senderzeile angeordnete Lichtquellen.

Die Lichtquellen sind bevorzugt so dicht angeordnet und orientiert, dass die auf einem Objekt erzeugten Sendelichtflecken ein Beleuchtungsfeld mit einer Kantenlänge von höchstens 20mm bilden. In einem etwas erweiterten Sinne kann damit auch die Gesamtheit der Lichtflecken auf dem angetasteten Objekt noch als punktförmig angesehen werden. Das Beleuchtungsfeld kann auch noch kleiner sein, etwa mit einer Kantenlänge von höchstens 15mm, 10mm oder sogar 5mm und weniger.

Die Lichtempfangselemente bilden zwei Empfängerzeilenanordnungen. Dadurch werden zusätzliche Möglichkeiten geschaffen, den Glanzreflex zu erfassen.

Die Empfängerzeilenanordnungen sind bevorzugt insbesondere symmetrisch zu beiden Seiten des Lichtsenders angeordnet. Dadurch wird eine Winkeltoleranz in der Richtung ("Y-Richtung") senkrecht zur Senderzeile geschaffen, und zwar durch die Lage der Empfängerzeilen zu beiden Seiten sowohl für positive wie für negative Kippwinkel.

Vorzugsweise sind mehrere Empfängerzeilenanordnungen nebeneinander angeordnet. Das ist auch kumulierbar mit mehreren zu beiden Seiten des Lichtsenders angeordneten Empfängerzeilen. Nebeneinander angeordnete Empfängerzeilen sorgen auch empfangsseitig für eine zusätzliche Winkeltoleranz in X-Richtung.

Die Empfängerzeilenanordnungen sind senkrecht zu der Senderzeile angeordnet. Dann gibt es eine klare und sinnvolle Aufteilung zwischen Lichtsender und Lichtempfänger, Winkeltoleranzen auszugleichen, nämlich in X-Richtung durch die mehreren Lichtquellen einer Senderzeile und in Y-Richtung durch die mehreren Lichtempfangselemente einer Empfängerzeile. Wie in einigen Absätzen weiter oben beschrieben, können sozusagen über Kreuz mehrere Senderzeilen für zusätzliche Toleranz in Y-Richtung und mehrere Empfängerzeilen für zusätzliche Toleranz in X-Richtung sorgen.

Der Sensor weist bevorzugt die Empfängerzeilenanordnungen ergänzende zusätzliche Lichtempfangselemente auf. Diese Lichtempfangselemente sind in etwas größeren radialen Abständen angeordnet als die Empfängerzeilen und erhöhen so den Winkeltoleranzbereich. Die zusätzlichen Lichtempfangselemente sind bevorzugt einfache Lichtempfänger wie Photodioden, keine ortsauflösenden Empfängerzeilen. Die Unterscheidung ist eher sprachlich als technisch, denn natürlich können mit ähnlichem Effekt, lediglich höherem Hardwareaufwand auch Empfängerzeilen in größeren radialen Abstand angeordnet werden, aber dies wäre durch die oben erläuterten Ausführungsformen bereits abgedeckt.

In Weiterbildung der Erfindung ist das Intensitätsprofil, die Amplitude, der Flächenschwerpunkt, der Flächeninhalt und/oder die Halbwertsbreite des Intensitätsprofils und/oder die Winkellage des Objekts mit Mittel zum Einlernen im Sensor in einem Speicher abspeicherbar. Das Einlernen wird auch als "Teach" bezeichnet. Das Mittel zum Einlernen ist dabei beispielsweise durch eine Betätigungstaste, einen Schalter, eine Leitung oder ein externes Eingabegerät gebildet. Durch Betätigen des Mittels zum Einlernen wird ein momentan vom Sensor erfasstes Intensitätsprofil, eine Amplitude, ein Flächenschwerpunkt, ein Flächeninhalt und/oder eine Halbwertsbreite des Intensitätsprofils und/oder eine Winkellage in dem Speicher abgespeichert. In einem Messbetrieb wird vom Sensor das Intensitätsprofil, die erfasste Amplitude, der erfasste Flächenschwerpunkt, der erfasste Flächeninhalt und/oder die erfasste Halbwertsbreite des Intensitätsprofils und/oder die Winkellage mit den gespeicherten Werten verglichen und bei einer Abweichung ein Signal ausgegeben. Damit kann gemäß der Erfindung ein Referenzvergleich durchgeführt werden, um beispielsweise zu prüfen, ob Schutzfolien oder Schutzsiegel vorhanden sind oder fehlen.

Wie bereits erwähnt, wird das Intensitätsprofil, die Amplitude, der Flächenschwerpunkt, der Flächeninhalt und/oder die Halbwertsbreite des Intensitätsprofils und/oder die Winkellage eingelernt. Werden dabei zwei der genannten Größen eingelernt, wird das als 2-Punkt-Einlernvorgang bzw. 2-Punkt-Teach bezeichnet, da hierbei eine Unterscheidung von mindestens zwei verschiedenen Werten, Zuständen bzw. Größen vorgenommen wird, um eine höchstmögliche sichere Unterscheidung vornehmen zu können. Weiter ist es auch vorgesehen, eine Unterscheidung von mindestens 3 Zuständen oder Größen vorzunehmen, wobei dieses Vorgehen als 3-Punkt-Einlernvorgang bzw. 3-Punkt-Teach bezeichnet wird.

Bei den Schutzfolien oder Schutzsiegeln kann es sich um sehr unterschiedliche Produkte handeln. Es kann sich dabei um Schutzfolien oder Schutzsiegeln auf Medikamentenverpackungen, auf Büchern, auf CD's, auf DVD's, auf Datenträgern, auf Chipkarten, auf Ausweisen, auf Identitätskarten, auf Zigarettenschachteln oder auf Produktverpackungen mit Originalteilen usw. handeln.

Die Schutzfolien oder Schutzsiegel selbst können Aufkleber, aufgedruckte Labels, transparente, nichttransparente, farbige, schwarz-weiße und/oder selbstklebende Folien sein. Die Schutzfolien oder Schutzsiegel können Bilder und/oder Texte aufweisen. Weiter können die Schutzfolien Hologramme oder glänzende Echtheitsmarkierungen aufweisen.

Weiter können die Schutzsiegel selbst durch einen Aufdruck oder eine Laminierung gebildet sein. Es ist mit dem erfindungsgemäßen Sensor auch möglich, bedruckte oder beklebte Oberflächen zu detektieren. Beispielsweise ist es möglich, einen flächigen Kleberauftrag zu detektieren.

Weiter können die Schutzfolien oder Schutzsiegel eindimensionale und/oder zweidimensionale Barcodes, QR-Codes oder RFID-Tags aufweisen.

Ein weiterer Anwendungsbereich der Erfindung ist die Überprüfung von Material, insbesondere, ob beispielsweise ein Material räumlich eine bestimmte Ausrichtung aufweist. Dies kann einfach dadurch geschehen, dass Glanzeigenschaften einer Oberfläche ausgewertet werden, um beispielsweise festzustellen, ob eine korrekte Seite eines Materials oder Produkts richtig angeordnet ist. Beispielsweise ist eine solche Prüfung in der Solarzellenherstellung wichtig.

Ein weiterer Anwendungsbereich ist die Detektion bzw. Unterscheidung von Objekten, bzw. Objektoberflächen, bzw. Oberflächeneigenschaften, insbesondere die Detektion und Unterscheidung von Schutzfolien oder Schutzsiegeln auf Oberflächen von Objekten auf einem Förderband, während sich diese Objekte am Sensor vorbeibewegen.

Weitere Anwendungsbereiche der Erfindung betreffen die Überprüfung des Poliergrades von Werkstücken bei Poliermaschinen. Hierbei wird ein Mindestpoliergrad des Werkstückes überprüft. Sobald der Mindestpoliergrad durch Feststellung des Glanzgrades erreicht ist, wird ein Signal ausgegeben. Hierdurch wird vorteilhaft Zeit und Material eingespart, die bei einem zu langen Polieren anfallen würden. Weiterhin wird auch eine Zerstörung des Polierwerkzeugs oder des Polierwerkstücks durch zu langes Polieren vermieden.

Ein weiterer Anwendungsbereich der Erfindung ist die Sortierung von Objekten, insbesondere die Sortierung von Blechen. Beispielsweise können die Metalle Aluminium, Stahl und/oder Kupfer aufgrund der unterschiedlichen Oberfläche, insbesondere aufgrund der unterschiedlichen Glanzeigenschaften durch den erfindungsgemäßen Sensor unterschieden werden.

Ein weiterer Anwendungsbereich ist die Detektion von transparenten Materialien im Auflichtverfahren, d. h. Lichtquelle und Lichtempfänger sind auf einer Seite des Materials angeordnet. Dabei ist auf der anderen Seite kein Reflektor notwendig. Lediglich aufgrund des Oberflächenglanzes des transparenten Materials kann dieses detektiert werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittansicht eines Sensors zur Erkennung glänzender Objekte;
- Fig. 2: eine Darstellung des Funktionsprinzips der Glanzerkennung;
- Fig. 3: jeweils ein beispielhafter Intensitätsverlauf über die Pixel der Empfängerzeile bei einem stark und einem weniger stark glänzenden Tastobjekt;
- Fig. 4: eine schematische Draufsicht auf eine beispielhafte symmetrische Anordnung von jeweils einer Empfängerzeile ober- und unterhalb der Senderzeilen;
- Fig. 5: eine schematische Draufsicht auf eine weitere beispielhafte Anordnung ähnlich Figur 4, jedoch mit je zwei Empfängerzeilen ober- und unterhalb der Senderzeilen; und
- Fig. 6: eine schematische Draufsicht auf eine weitere beispielhafte Anordnung ähnlich Figur 4, jedoch mit zusätzlichen, weiter vom Zentrum beabstandeten Empfangselementen zur Vergrößerung der Winkeltoleranz.

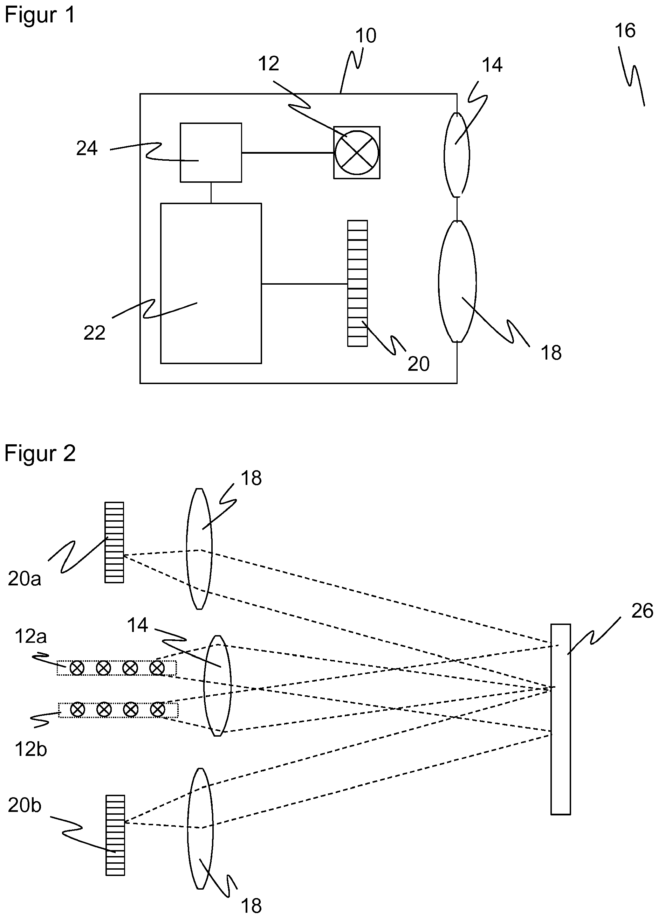

Figur 1 zeigt eine schematische Schnittansicht eines Sensors 10 zur Erkennung glänzender Objekte. Ein Lichtsender 12 sendet über eine Sendeoptik 14 einen Sendelichtstrahl in einen Überwachungsbereich 16. Befindet sich dort ein Objekt, so kehrt zumindest ein Teil des Sendelichtstrahls zu dem Sensor 10 zurück und wird über eine Empfangsoptik 18 als Lichtfleck auf einen Lichtempfänger 20 geführt. Aus dem Empfangssignal des Lichtempfängers 20 erkennt eine Auswertungseinheit 22, ob ein Objekt erfasst wurde, und bestimmt Eigenschaften des Objekts. Mit Hilfe einer Sendersteuerung 24 aktiviert die Auswertungseinheit außerdem den Lichtsender 12.

Die Elemente des Sensors 10 sind in Figur 1 nur ganz schematisch gezeigt. Der Lichtsender 12 weist anstelle der einzigen eingezeichneten Lichtquelle eine Vielzahl von zu einer oder mehreren Senderzeilen angeordneten Lichtquellen auf, beispielsweise mehrerer LEDs oder Laserlichtquellen. Der Lichtempfänger 20 umfasst eine Vielzahl von zu einer Zeile angeordneten Photodioden oder ist als Zeilensensor beispielsweise in CCD- oder CMOS-Technologie ausgebildet. Zusätzliche an sich bekannte Elemente wie Polfilter oder andere optische Filter sind möglich. Die Funktionsweise des Sensors 10 zur zuverlässigen Erkennung glänzender Objekte einschließlich der Auswertung sowie möglicher Anordnungen der Lichtquellen und Lichtempfangselemente werden im Folgenden näher erläutert.

Für die sichere Detektion von Glanz im industriellen Umfeld sollten vorzugsweise zwei Bedingungen erfüllt sein. Zum einen sollten Neigungswinkeltoleranzen des Objekts beherrscht werden, die sich aus der Führung, der Montage oder der Behandlung des Objekts ergeben. Außerdem sollte der Sensor eine hohe Sensitivität erzielen, um beispielsweise matte von glänzenden und auch stark glänzende von weniger stark glänzenden Objekten zu unterscheiden.

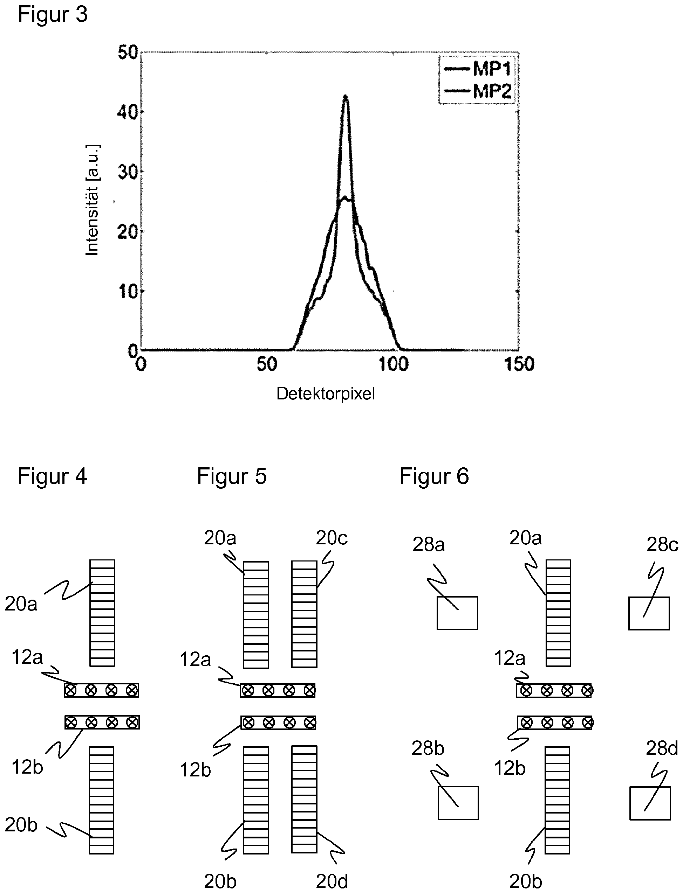

Eine erhöhte Toleranz gegenüber Objektverkippungen wird erfindungsgemäß durch das Vorsehen von einer oder mehreren Senderzeilen beziehungsweise einer oder mehreren Empfängerzeilen erreicht. Das allgemeine Prinzip wird weiter unten anhand der Figur 2 erläutert. Figur 3 zeigt beispielhafte orts- oder pixelaufgelöste Empfangssignale einer Empfängerzeile, und die Figuren 4 bis 6 illustrieren verschiedene denkbare Anordnungen von Sender- und Empfängerzeilen. Beispielsweise sorgen mehrere zu einer Senderzeile angeordnete Lichtquellen des Lichtsenders 12 dafür, dass unabhängig von der Neigung in Senderzeilenrichtung ("X-Richtung") mindestens ein Sendelichtstrahl einer Lichtquelle den Lichtempfänger 20 trifft. Gleichermaßen sorgen beispielsweise mehrere zu einer Empfängerzeile senkrecht zu der Senderzeile angeordnete Lichtempfangselemente dafür, dass mindestens ein Lichtempfangselement des Lichtempfängers 20 unabhängig von der Neigung in Empfängerzeilenrichtung ("Y-Richtung") von dem Licht einer Lichtquelle des Lichtsenders 12 getroffen wird.

Denkbare Maßnahmen zur Erhöhung der Sensitivität umfassen die Kollimierung der Sendestrahlen, eine große Empfangspupille und eine erhöhte Ortsauflösung durch den pixelaufgelösten Lichtempfänger 20.

Die Kollimierung der Sendestrahlen wird durch eine entsprechende Sendeoptik 14 erreicht, die anders als dargestellt auch je eine Linse pro Lichtquelle des Lichtsenders 12 aufweisen kann. Ein quasi paralleles Strahlenbündel zur Objektbeleuchtung sorgt für einen klar abgegrenzten Lichtfleck mit hoher Informationsdichte und scharfen Signalflanken, so dass Unterschiede in den reflektierenden Eigenschaften des Objekts, also dessen Glanzgrad, besonders hervorgehoben und nicht durch Abstandsabhängigkeiten verwischt werden. Eine Vermischung durch unterschiedliche Beleuchtungswinkel wie bei fokussiertem oder divergentem Sendelicht würde die Detektionssensitivität mindern, weil die Rückstreuinformation des Objekts nicht mehr direkt in den Lichtempfänger 20 reflektiert wird. Das Empfangssignal in der Bildebene würde verschmiert und breiter, die Glanzcharakteristik durch Tastweitenschwankungen unschärfer.

Eine große Empfangspupille, die auf den Durchmesser der Sendelichtbündel abgestimmt ist, vermeidet, dass das reflektierte Sendelicht durch die Empfangsapertur zu stark beschnitten wird. Der ortsauflösende Lichtempfänger 20 ermöglicht eine genaue Auswertung des von dem Empfangslichtfleck erzeugten Intensitätsmaximums, oder anders ausgedrückt kann die Glanzcharakteristik als Strahlungsverteilung auf dem Lichtempfänger 20 zur sicheren Unterscheidung verschiedenster Materialien verwendet werden.

Figur 2 stellt das Funktionsprinzip zur Glanzerkennung dar. Um die Anordnung der Lichtquellen der Senderzeilen 12a-b des Lichtempfängers 12 und der Lichtempfangselemente der Empfängerzeilen 20a-b des Lichtempfängers 20 darstellen zu können, sind sie in einer Draufsicht gezeigt, obwohl sie eigentlich in der Perspektive der Figur 2 auf einer vertikal orientierten Ebene senkrecht zur Papierebene liegen.

Gezeigt sind beispielhaft je zwei Senderzeilen 12a-b und zwei Empfängerzeilen 20a-b. Ebenso beispielhaft ist die Anzahl der hier vier Lichtquellen je Senderzeile 12a-b und der Lichtempfangselemente oder Pixel je Empfängerzeile 20a-b. Die von den Lichtquellen des Lichtsenders 20 erzeugten Lichtflecken auf einem angetasteten Objekt 26 liegen innerhalb eines kleinen Beleuchtungsfeldes von beispielsweise höchstens 20mm oder sogar nur höchstens 10mm Kantenlänge. Dadurch wird erreicht, dass die Messung weitgehend punktuell und damit unabhängig davon bleibt, welches Paar aus Lichtquelle und Lichtempfangselement jeweils einen Glanzreflex erzeugt und empfängt. Eine gewisse Ausdehnung der einzelnen Lichtflecken ist aber noch erwünscht, damit ein Mittelungseffekt eintritt und nicht beispielsweise kleine Störungen durch Perforation oder dergleichen das Messergebnis dominieren.

Die Lichtquellen können einzeln, in Gruppen oder gemeinsam aktiviert werden. Dadurch wird je nach Erfordernissen eine schnellere Messung oder eine klare Kanaltrennung erreicht. Die Lichtempfangselemente des Lichtempfängers 20 können sehr schnell parallel oder sequentiell ausgelesen werden.

Die Senderzeilen 12a-b und die Empfängerzeilen 20a-b sind symmetrisch zu einer horizontalen Mittelachse angeordnet, und die Empfängerzeilen 20a-b stehen senkrecht zu den Senderzeilen 12a-b. Dadurch sind sozusagen die einzelnen Lichtquellen einer Senderzeile 12a-b für die Winkeltoleranz in der horizontalen X-Richtung und die Lichtempfangselemente einer Empfängerzeile 20a-b für die Winkeltoleranz in der vertikalen Y-Richtung zuständig. Zwei oder mehrere zueinander parallele Senderzeilen 12a-b erhöhen den Winkeltoleranzbereich oder helfen, Blindzonen zu beseitigen. Ähnliches lässt sich mit zusätzlichen Empfängerzeilen erreichen, wie später in Figur 5 noch gezeigt wird.

In der Darstellung gemäß Figur 2 mit einer senkrecht orientierten Oberfläche des angetasteten Objekts 26 wird die obere Senderzeile 12a auf die untere Empfängerzeile 20b abgebildet und umgekehrt die untere Senderzeile 12b auf die obere Empfängerzeile 20a. Bei Verkippung des Objekts 26 ist auch eine andere Zuordnung denkbar.

Das jeweils entstehende und auf einer Empfängerzeile 20a-b abgebildete Intensitätsprofil hängt von der Rückstreucharakteristik des Objekts 26, also von dem Glanzgrad der angetasteten Oberfläche ab. Figur 3 zeigt zwei Beispiele eines Intensitätsverlaufs über die Pixel oder Lichtempfangselemente einer Empfängerzeile 20a-b. Es zeigt sich deutlich, dass das eine Beispiel ein schmaleres und höheres Intensitätsmaximum erzeugt als das andere. Der Unterschied wird beispielsweise dadurch erzeugt, dass mit dem besonders ausgeprägten Intensitätsprofil eine glänzende Folie erfasst wurde, die bei Erfassung des breiteren Intensitätsprofils nicht vorhanden ist. Dadurch lässt sich insbesondere in Anwendungen mit Sicherheitsverpackungen, etwa im Pharmaziebereich, das ursprüngliche Vorhandensein eines Schutzsiegels erkennen ("tamper evident").

Die Bewertung gemäß Figur 3 ist nur mit einem ortsauflösenden Lichtempfänger 20 möglich. Als konkrete Umsetzung in der Auswertungseinheit 22 wird zunächst das Intensitätsmaximum als solches etwa mit Hilfe einer Schwellenoperation oder einer einfachen Maximumssuche identifiziert und dann mit einfachen Parametern wie Flächeninhalt (Integral), Amplitude (Peakhöhe) oder Halbwertsbreite beziehungsweise Vergleichen oder Verrechnungen dieser Parameter charakterisiert. Um mehr Robustheit gegenüber Fremdlicht zu erreichen, kann eine Dunkelmessung bei inaktiven Lichtquellen durchgeführt und das dabei gemessene Intensitätsprofil in der späteren Auswertung berücksichtigt werden, im einfachsten Fall durch Differenzbildung.

Die Figuren 4 bis 6 zeigen einige Beispiele von möglichen Anordnungen der Senderzeilen 12a-b und der Empfängerzeilen 20a-d. Die Anordnung gemäß Figur 4 entspricht derjenigen aus Figur 2. Dies illustriert lediglich, dass die Dimensionen und Abstände anpassbar sind, und schafft eine Vergleichsbasis. In Figur 5 sind zusätzliche Empfängerzeilen 20c-d vorgesehen, so dass jeweils zwei oder mehr Empfängerzeilen nebeneinander angeordnet sind. Das erhöht den Toleranzbereich in X-Richtung und schließt mögliche Blindbereiche. Ein ähnlicher Effekt ließe sich durch breitere Lichtempfangselemente erzielen. In Figur 6 schließlich sind zusätzlich zu den Empfängerzeilen 20a-b noch weitere Empfangselemente 28a-d sozusagen in den Ecken angeordnet. An diesen und weiteren Positionen könnten alternativ weitere Empfängerzeilen vorgesehen werden. Die zusätzlichen Empfangselemente 28a-d ermöglichen noch größere Rückstrahlwinkel des Tastguts und erhöhen damit die Toleranz gegenüber Winkelschwankungen weiter. Sie können auch dafür genutzt werden, besonders breite Rückstrahlcharakteristiken zu erfassen.

Durch zusätzliche Verwendung von verschiedenen Filterelementen, wie Polfiltern oder Farbfiltern, können mit dem Sensor 10 weitere Anwendungen abgedeckt werden. Ein Beispiel ist die Detektion von Lumineszenzeigenschaften, um sicherzustellen, dass das richtige Material verwendet wurde, beispielsweise der richtige glänzende Kleber.

## Patentansprüche

1. Optoelektronischer Sensor (10) zur Erfassung glänzender Objekte (26), der einen Lichtsender (12) mit mindestens einer Lichtquelle zum Erzeugen eines Sendelichtstrahls, einen Lichtempfänger (20) mit einer Empfängerzeilenanordnung (20a-d) von Lichtempfangselementen sowie einer Auswertungseinheit (22) aufweist, um glänzende Objekte (26) anhand eines Empfangssignals des Lichtempfängers (20) zu erkennen,
wobei der Lichtsender (12) mehrere zu mindestens einer Senderzeile (12a-b) angeordnete Lichtquellen aufweist und wobei die Auswertungseinheit (22) dafür ausgebildet ist, in den Empfangssignalen der Lichtempfangselemente eine Halbwertsbreite des Intensitätsprofils über die Zeilenanordnung zu erkennen und auszuwerten, wobei die Lichtempfangselemente zwei Empfängerzeilenanordnungen (20a-d) bilden, wobei die Auswertungseinheit (22) dafür ausgebildet ist, aus einer Position mindestens zweier Intensitätsmaxima innerhalb der Empfängerzeilenanordnung (20a-d) eine Winkellage eines erfassten Objekts zu bestimmen,
**dadurch gekennzeichnet, dass** der Lichtsender (12) zu zwei Senderzeilen (12a-b) angeordnete Lichtquellen aufweist, wobei die Empfängerzeilenanordnungen zu beiden Seiten des Lichtsenders (12) angeordnet sind, wobei die Senderzeilen (12a-b) und die Empfängerzeilen (20a-b) symmetrisch zu einer horizontalen Mittelachse angeordnet sind, wobei die Empfängerzeilenanordnungen (20a-d) senkrecht zu den Senderzeilen (12a-b) angeordnet sind und die Senderzeilen (12a-b) parallel zueinander sind, wobei bei einer senkrecht orientierten Oberfläche des angetasteten Objekts (26) die obere Senderzeile (12a) auf die untere Empfängerzeile (20b) abgebildet ist und umgekehrt die untere Senderzeile (12b) auf die obere Empfängerzeile (20a) abgebildet ist.

2. Sensor (10) nach Anspruch 1,
wobei der Lichtsender (12) eine Sendeoptik (14) aufweist, um den Sendelichtstrahl seiner Lichtquellen zu kollimieren.

3. Sensor (10) nach Anspruch 1 oder 2,
wobei die Auswertungseinheit (22) dafür ausgebildet ist, eine Amplitude, einen Flächenschwerpunkt und/oder einen Flächeninhalt des Intensitätsprofils und daraus einen Glanzgrad eines erfassten Objekts (26) zu bestimmen.

4. Sensor (10) nach einem der vorhergehenden Ansprüche,
wobei die Auswertungseinheit (22) dafür ausgebildet ist, aus einer Position mindestens zweier Intensitätsmaxima innerhalb der Empfängerzeilenanordnung (20a-d) eine Entfernung eines erfassten Objekts zu bestimmen.

5. Sensor (10) nach einem der vorhergehenden Ansprüche,
wobei die Lichtquellen des Lichtsenders (12) einzeln ansteuerbar sind.

6. Sensor (10) nach einem der vorhergehenden Ansprüche,
wobei die Lichtquellen unterschiedliche Wellenlängen aufweisen.

7. Sensor (10) nach einem der vorhergehenden Ansprüche,
wobei die Lichtquellen so dicht angeordnet und orientiert sind, dass die auf einem Objekt (26) erzeugten Sendelichtflecken ein Beleuchtungsfeld mit einer Kantenlänge von höchstens 20mm bilden.

8. Sensor (10) nach Anspruch 1,
wobei mehrere Empfängerzeilenanordnungen (20a-d) nebeneinander angeordnet sind.

9. Sensor (10) nach einem der Ansprüche 1 bis 8,
der die Empfängerzeilenanordnung (20a-d) ergänzende zusätzliche Lichtempfangselemente (28a-d) aufweist.

10. Sensor (10) nach einem der vorhergehenden Ansprüche, **dadurch gekennzeichnet, dass** das Intensitätsprofil, die Amplitude, der Flächenschwerpunkt, der Flächeninhalt und/oder die Halbwertsbreite des Intensitätsprofils und/oder die Winkellage des Objekts (26) mit Mittel zum Einlernen im Sensor (10) in einem Speicher abspeicherbar sind.

11. Verfahren zur Erfassung glänzender Objekte (26), bei dem von einem Lichtsender (12) mit mindestens einer Lichtquelle ein Sendelichtstrahl in einen Überwachungsbereich (16) ausgesandt und ein von einem Lichtempfänger (2) mit einer Empfängerzeilenanordnung (20a-d) von Lichtempfangselementen erzeugtes Empfangssignal ausgewertet wird, um glänzende Objekte (26) zu erkennen, wobei von mehreren zu mindestens einer Senderzeile (12a-d) angeordnete Lichtquellen jeweils ein Sendelichtstrahl ausgesandt wird, wobei in den Empfangssignalen der Lichtempfangselemente eine Halbwertsbreite des Intensitätsprofils über die Zeilenanordnung erkannt und ausgewertet wird, wobei die Lichtempfangselemente zwei Empfängerzeilenanordnungen (20a-d) bilden,
wobei aus einer Position mindestens zweier Intensitätsmaxima innerhalb der Empfängerzeilenanordnung (20a-d) eine Winkellage eines erfassten Objekts bestimmt wird, **dadurch gekennzeichnet, dass** der Lichtsender (12) zu zwei Senderzeilen (12a-b) angeordnete Lichtquellen aufweist, wobei die Empfängerzeilenanordnungen zu beiden Seiten des Lichtsenders (12) angeordnet sind, wobei die Senderzeilen (12a-b) und die Empfängerzeilen (20a-b) symmetrisch zu einer horizontalen Mittelachse angeordnet sind, wobei die Empfängerzeilenanordnungen (20a-d) senkrecht zu den Senderzeilen (12a-b) angeordnet sind und die Senderzeilen (12a-b) parallel zueinander sind, wobei bei einer senkrecht orientierten Oberfläche des angetasteten Objekts (26) die obere Senderzeile (12a) auf die untere Empfängerzeile (20b) abgebildet wird und umgekehrt die untere Senderzeile (12b) auf die obere Empfängerzeile (20a) abgebildet wird.

## Claims

1. An optoelectronic sensor (10) for detecting shiny objects (26) that has a light transmitter (12) having at least one light source for generating a transmission light beam, a light receiver (20) having a receiver row arrangement (20a-d) of light reception elements, and an evaluation unit (22) to recognize shiny objects (26) based on a reception signal of the light receiver (20),
wherein the light transmitter (12) has a plurality of light sources arranged to form at least one transmitter row (12a-b), and wherein the evaluation unit (22) is configured to recognize and evaluate a full width at half maximum of the intensity profile over the row arrangement in the reception signals of the light reception elements, wherein the light reception elements form two receiver row arrangements (20a-d), wherein the evaluation unit (22) is configured to determine an angular position of a detected object from a position of at least two intensity maxima within the receiver row arrangement (20a-d),
**characterized in that** the light transmitter (12) comprises light sources arranged to form two transmitter rows (12a-b), with the receiver row arrangements being arranged at both sides of the light transmitter (12), with the transmitter rows (12a-b) and the receiver rows (20a-b) being symmetrically arranged with respect to a horizontal center axis, with the receiver row arrangements (20a-d) being arranged perpendicular to the transmitter rows (12a-b) and the transmitter rows (12a-b) being in parallel with one another, with, in a perpendicularly oriented surface of the scanned object (26), the upper transmitter row (12a) being imaged onto the lower receiver row (20b) and, vice versa, the lower transmitter row (12b) being imaged onto the upper receiver row (20a).

2. A sensor (10) in accordance with claim 1,
wherein the light transmitter (12) has a transmission optics (14) to collimate the transmission light beam of its light sources.

3. A sensor (10) in accordance with claim 1 or claim 2,
wherein the evaluation unit (22) is configured to determine an amplitude, a center of area and/or an area of the intensity profile and, from this, a gloss level of a detected object (26).

4. A sensor (10) in accordance with any one of the preceding claims,
wherein the evaluation unit (22) is configured to determine a distance of a detected object from a position of at least two intensity maxima within the receiver row arrangement (20a-d).

5. A sensor (10) in accordance with any one of the preceding claims, wherein the light sources of the light transmitter (12) are individually controllable.

6. A sensor (10) in accordance with any one of the preceding claims, wherein the light sources have different wavelengths.

7. A sensor (10) in accordance with any one of the preceding claims,
wherein the light sources are so closely arranged and oriented that the transmitted light spots generated on an object (26) form an illumination field having an edge length of at most 20mm.

8. A sensor (10) in accordance with claim 1,
wherein a plurality of receiver row arrangements (20a-d) are arranged next to one another.

9. A sensor (10) in accordance with any one of the claims 1 to 8,
that has additional light reception elements (28a-d) supplementing the receiver row arrangement (20a-d).

10. A sensor (10) in accordance with any one of the preceding claims,
**characterized in that** the intensity profile, the amplitude, the center of area, the area and/or the full width at half maximum of the intensity profile and/or the angular position of the object (26) with a means for teaching in the sensor (10) can be stored in a memory.

11. A method of detecting shiny objects (26) in which a transmission light beam is transmitted into a monitored zone (16) by a light transmitter (12) having at least one light source and a reception signal generated by a light receiver (2) having a receiver row arrangement (20a-d) of light reception elements is evaluated in order to recognize shiny objects (26), wherein a respective transmission light beam is transmitted by a plurality of light sources arranged to form at least one transmitter row (12a-d), wherein, in the reception signals of the light reception elements, a full width at half maximum of the intensity profile is recognized and evaluated via the row arrangement, wherein the light reception elements form two receiver row arrangements (20a-d), wherein an angular position of a detected object is determined from a position of at least two intensity maxima within the receiver row arrangement (20a-d), **characterized in that** the light transmitter (12) has light sources arranged to form two transmitter rows (12a-b), with the receiver row arrangements being arranged at both sides of the light transmitter (12), with the transmitter rows (12a-b) and the receiver rows (20a-b) being arranged symmetrically with respect to a horizontal center axis, with the receiver row arrangements (20a-d) being arranged perpendicular to the transmitter rows (12a-b) and the transmitter rows (12a-b) being in parallel with one another, with, in a perpendicularly oriented surface of the scanned object (26), the upper transmitter row (12a) being imaged onto the lower receiver row (20b) and, vice versa, the lower transmitter row (12b) being imaged onto the upper receiver row (20a).

## Revendications

1. Capteur optoélectronique (10) pour la détection d'objets brillants (26), qui comprend un émetteur de lumière (12) avec au moins une source lumineuse pour générer un faisceau lumineux d'émission, un récepteur de lumière (20) avec un agencement de lignes de réception (20a-d) d'éléments de réception de lumière, ainsi qu'une unité d'évaluation (22), afin de reconnaître des objets brillants (26) à l'aide d'un signal de réception du récepteur de lumière (20),
dans lequel l'émetteur de lumière (12) comprend plusieurs sources lumineuses disposées en au moins une ligne d'émission (12a-b), et l'unité d'évaluation (22) est réalisée pour reconnaître, dans les signaux de réception des éléments de réception de lumière, une largeur à mi-hauteur du profil d'intensité par l'intermédiaire de l'agencement des lignes, et pour l'évaluer, les éléments de réception de lumière forment deux agencements de lignes de réception (20a-d), l'unité d'évaluation (22) est réalisée pour déterminer une position angulaire d'un objet détecté à partir d'une position d'au moins deux maxima d'intensité à l'intérieur de l'agencement de lignes de réception (20a-d),
**caractérisé en ce que**
l'émetteur de lumière (12) comprend des sources lumineuses disposées en deux lignes d'émission (12a-b), les agencements de lignes de réception sont disposés de part et d'autre de l'émetteur de lumière (12), les lignes d'émission (12a-b) et les lignes de réception (20a-b) sont disposées symétriquement par rapport à un axe central horizontal, les agencements de lignes de réception (20a-d) sont disposés perpendiculairement aux lignes d'émission (12a-b), et les lignes d'émission (12a-b) sont parallèles les unes aux autres, lors d'une surface orientée verticalement de l'objet (26) balayée, la ligne d'émission supérieure (12a) est représentée sur la ligne de réception inférieure (20b), et inversement, la ligne d'émission inférieure (12b) est représentée sur la ligne de réception supérieure (20a).

2. Capteur (10) selon la revendication 1,
dans lequel l'émetteur de lumière (12) comporte une optique d'émission (14) pour collimater le faisceau lumineux d'émission de ses sources lumineuses.

3. Capteur (10) selon la revendication 1 ou 2,
dans lequel l'unité d'évaluation (22) est réalisée pour déterminer une amplitude, un barycentre de surface et/ou une aire du profil d'intensité et, à partir de là, un degré de brillance d'un objet (26) détecté.

4. Capteur (10) selon l'une des revendications précédentes,
dans lequel l'unité d'évaluation (22) est réalisée pour déterminer une distance d'un objet détecté à partir d'une position d'au moins deux maxima d'intensité à l'intérieur de l'agencement de lignes de réception (20a-d).

5. Capteur (10) selon l'une des revendications précédentes,
dans lequel les sources lumineuses de l'émetteur de lumière (12) peuvent être commandées individuellement.

6. Capteur (10) selon l'une des revendications précédentes,
dans lequel les sources lumineuses présentent des longueurs d'onde différentes.

7. Capteur (10) selon l'une des revendications précédentes,
dans lequel les sources lumineuses sont disposées et orientées de manière suffisamment dense pour que les taches lumineuses d'émission générées sur un objet (26) forment un champ d'éclairage avec une longueur de bord de 20 mm au maximum.

8. Capteur (10) selon la revendication 1,
dans lequel plusieurs agencements de lignes de réception (20a-d) sont disposés les uns à côté des autres.

9. Capteur (10) selon l'une des revendications 1 à 8,
comprenant des éléments de réception de lumière supplémentaires (28a-d) complétant l'agencement de lignes de réception (20a-d).

10. Capteur (10) selon l'une des revendications précédentes,
**caractérisé en ce que**
le profil d'intensité, l'amplitude, le barycentre de la surface, l'aire et/ou la largeur à mi-hauteur du profil d'intensité et/ou la position angulaire de l'objet (26) avec un moyen d'apprentissage dans le capteur (10) peuvent être stockés dans une mémoire,.

11. Procédé de détection d'objets brillants (26), dans lequel un faisceau lumineux d'émission est émis dans une zone à surveiller (16) par un émetteur de lumière (12) comportant au moins une source lumineuse, et un signal de réception généré par un récepteur de lumière (2) comportant un agencement de lignes de réception (20a-d) d'éléments de réception de lumière est évalué afin de reconnaître des objets brillants (26), dans lequel un faisceau lumineux d'émission respectif est émis par plusieurs sources lumineuses disposées en au moins une ligne d'émission (12a-d), dans les signaux de réception des éléments de réception de lumière, une largeur à mi-hauteur du profil d'intensité est reconnue par l'intermédiaire de l'agencement des lignes et est évaluée, les éléments de réception de lumière forment deux agencements de lignes de réception (20a-d), une position angulaire d'un objet détecté est déterminée à partir d'une position d'au moins deux maxima d'intensité à l'intérieur de l'agencement de lignes de réception (20ad),
**caractérisé en ce que**
l'émetteur de lumière (12) comprend des sources lumineuses disposées en deux lignes d'émission (12a-b), les agencements de lignes de réception sont disposés de part et d'autre de l'émetteur de lumière (12), les lignes d'émission (12a-b) et les lignes de réception (20a-b) sont disposées symétriquement par rapport à un axe central horizontal, les agencements de lignes de réception (20a-d) sont disposés perpendiculairement aux lignes d'émission (12a-b), et les lignes d'émission (12a-b) sont parallèles les unes aux autres, lors d'une surface orientée verticalement de l'objet (26) balayée, la ligne d'émission supérieure (12a) est représentée sur la ligne de réception inférieure (20b), et inversement, la ligne d'émission inférieure (12b) est représentée sur la ligne de réception supérieure (20a).
